# FASCICULE DE BREVET EUROPEEN

(11) **EP 3 523 552 B1**
(45) Date de publication et mention de la délivrance du brevet: **05.04.2023**
(21) Numéro de dépôt: 16788736.3
(22) Date de dépôt: 06.10.2016
(51) Int. Cl.: F16F 1/373

(54) **SUPPORT ANTI-VIBRATOIRE POUR VÉHICULE AUTOMOBILE ET VÉHICULE AUTOMOBILE MUNI DE CELUI-CI**
SCHWINGUNGSDÄMPFENDE HALTERUNG FÜR EIN KRAFTFAHRZEUG UND DAMIT AUSGESTATTETES KRAFTFAHRZEUG
ANTI-VIBRATORY SUPPORT FOR A MOTOR VEHICLE AND MOTOR VEHICLE EQUIPPED WITH SAME

(43) Date de publication de la demande: 14.08.2019
(73) Titulaire: ContiTech Vibration Control GmbH, 30165 Hannover (DE)
(72) Inventeur: HERCOUET, Roland, 35310 Breal Sous Monfort (FR); VIVION, Aurélien, 35200 Rennes (FR); TIREL, Yvon, 35131 Chartres De Bretagne (FR)
(74) Mandataire: Continental Corporation
(86) Numéro de dépôt international: PCT/FR2016/052578
(87) Numéro de publication internationale: WO 2018/065677

(56) Documents cités:
- DE-A1-102010 015 882
- DE-A1-102011 006 917
- US-A- 4 067 525
- US-A- 5 704 598
- US-A1- 2006 091 594

## Description

L'invention concerne un support anti-vibratoire.

Un domaine d'application de l'invention concerne des véhicules automobiles dans lesquels une partie vibrante, telle que par exemple un moteur est montée sur la caisse par l'intermédiaire d'un ou plusieurs supports anti-vibratoires.

L'un des problèmes posés par ces supports anti-vibratoires est leur poids.

En effet, on cherche, dans le secteur de l'automobile, à alléger les pièces.

Toutefois, cet allègement recherché ne doit se faire au détriment ni de la tenue mécanique du support anti-vibratoire, ni de l'amortissement des vibrations devant être effectué par le support anti-vibratoire.

En effet, la partie vibrante a tendance à transmettre des vibrations à la caisse par l'intermédiaire du support. De plus, le support anti-vibratoire doit permettre au véhicule automobile de passer avec succès les tests de résistance mécanique, notamment les essais de collision (en anglais crash test).

Le document US5704598, qui est considéré comme l'art antérieur le plus pertinent, décrit un support antivibratoire combinant des pièces métalliques et des pièces en matières thermoplastiques.

L'invention vise à obtenir un support anti-vibratoire, qui soit d'un poids allégé ne pénalisant ni la tenue mécanique, ni l'amortissement des vibrations, ni le filtrage des vibrations, devant être procurés par le support anti-vibratoire.

A cet effet, l'invention a pour objet un support anti-vibratoire suivant la revendication 1.

Grâce à l'invention, le support anti-vibratoire assure une bonne résistance mécanique aux efforts s'exerçant entre la première armature métallique et la deuxième armature métallique, ce qui permet de passer avec succès les essais de collision, exigeant que cette résistance mécanique soit supérieure à une valeur prescrite.

Le renfort peut être de forme variée.

Par exemple, suivant un mode de réalisation, la première armature métallique est reliée à la deuxième armature métallique par un ensemble de forme générale annulaire (corps en matière thermoplastique, renfort, pièce en élastomère) qui est à la fois d'un poids allégé par rapport à du métal et en faisant le lien avec la troisième armature métallique devant être fixée à la partie vibrante et qui permet d'amortir les vibrations provenant de cette dernière et envoyées à cette troisième armature métallique.

Suivant un mode de réalisation de l'invention, le corps (4) en matière thermoplastique comporte une première ouverture (43) de traversée dans une deuxième direction (D2) sensiblement verticale, la première ouverture (43) étant entourée par le renfort (3),
une portion intérieure (21) de la pièce (2) en élastomère ayant elle-même une deuxième ouverture (23) de traversée dans la deuxième direction (D2),
un passage (230) ouvert vers le bas dans la deuxième direction (D2) sous la troisième armature (5) étant délimité par la deuxième ouverture (23), le passage (230) étant entouré par la première ouverture (43).

Suivant un mode de réalisation de l'invention, la troisième armature métallique (5) comporte au moins une troisième ouverture (53) de traversée dans la deuxième direction (D2), située au-dessus de la deuxième ouverture (23) dans la deuxième direction (D2).

Suivant un mode de réalisation de l'invention, le renfort (3) s'étend suivant un sens (SE) d'enroulement sensiblement horizontal autour de la deuxième direction (D2), et est à fibres continues unidirectionnelles s'étendant dans le sens (SE) d'enroulement et noyées dans un polymère pour former la pièce préfabriquée ayant la forme d'une boucle (30).

Suivant un mode de réalisation de l'invention, la deuxième ouverture (23) de la pièce (2) en élastomère traverse la première ouverture (43) du corps (4) en matière thermoplastique suivant la deuxième direction (D2).

Suivant un mode de réalisation de l'invention, le renfort (3) s'étend autour de la deuxième direction (D2) et entoure la première ouverture (43) et la deuxième ouverture (23).

Suivant un mode de réalisation de l'invention, la pièce (2) en élastomère comporte une portion supérieure (22) recouvrant une partie (410) de la surface supérieure (41) du corps (4) en matière thermoplastique et soutenant la troisième armature (5).

Suivant un mode de réalisation de l'invention, les première et deuxième surfaces (112, 122) sont verticales.

Suivant un mode de réalisation de l'invention, la pièce (2) en élastomère comporte une première excroissance (24a) de butée et une deuxième excroissance (24b) de butée, qui sont destinées à buter vers le bas contre d'autres parties correspondantes du support anti-vibratoire et qui sont éloignées l'une de l'autre transversalement à une deuxième direction (D2) sensiblement verticale.

Suivant un mode de réalisation de l'invention, la troisième armature (5) s'étend suivant une deuxième direction (D2) sensiblement verticale entre un premier niveau inférieur (N1) et un deuxième niveau supérieur (N2),
le corps (4) en matière thermoplastique s'étend suivant la deuxième direction (D2) sensiblement verticale entre un troisième niveau inférieur (N3) et un quatrième niveau supérieur (N4),
le premier niveau inférieur (N1) étant situé au-dessus du quatrième niveau supérieur (N4).

Suivant un mode de réalisation de l'invention, les première et deuxième armatures (11, 12) comportent respectivement des premier et deuxième trous (113, 123), qui servent à la traversée suivant une deuxième direction (D2) sensiblement verticale pour la fixation à la caisse de véhicule automobile et qui sont délimités par respectivement des troisième et quatrième surfaces libres (114, 124), accessibles de l'extérieur et raccordées aux première et deuxième surfaces (112, 122).

Suivant un mode de réalisation de l'invention, les première et deuxième armatures (11, 12) sont formées par respectivement des premier et deuxième anneaux (11, 12) délimitant les premier et deuxième trous (113, 123), les troisième et quatrième surfaces libres (114, 124) étant situées du côté intérieur des premier et deuxième anneaux (11, 12), les première et deuxième surfaces (112, 122) étant situées du côté extérieur des premier et deuxième anneaux (11, 12).

Suivant un mode de réalisation de l'invention, les troisième et quatrième surfaces (114, 124) et les premier et deuxième trous (1113, 1213) sont situés sur respectivement des première et deuxième pattes (115, 125) externes de fixation dépassant vers l'extérieur du corps (4) dans la première direction (D1) sensiblement horizontale.

Suivant un mode de réalisation de l'invention, les première et deuxième pattes (115, 125) sont horizontales et coudées par rapport aux première et deuxième surfaces (112, 122) verticales.

Un deuxième objet de l'invention est un véhicule automobile, comportant une caisse, un moteur monté sur la caisse et au moins un support anti-vibratoire tel que décrit ci-dessus, les première et deuxièmes armatures (11, 12) étant fixées à la caisse, la troisième armature métallique (5) étant fixée au moteur situé sous le support anti-vibratoire (100).

L'invention sera mieux comprise à la lecture de la description qui va suivre, donnée uniquement à titre d'exemple non limitatif en référence aux dessins annexés, sur lesquels :
- les figures 1, 3 et 4 sont des vues schématiques en coupe verticale suivant un plan de coupe vertical A-A, allant de la première à la deuxième armature, et des deuxièmes plans de coupe B-B et C-C verticaux perpendiculaires au plan de coupe A-A, traversant la première armature et la troisième armature, d'un support anti-vibratoire selon un premier mode de réalisation de l'invention ;
- la figure 2 est une vue schématique de dessus du support anti-vibratoire suivant le premier mode de réalisation de l'invention ;
- les figures 6 et 8 sont des vues schématiques en perspective de dessus et de dessous du support anti-vibratoire suivant le premier mode de réalisation de l'invention ;

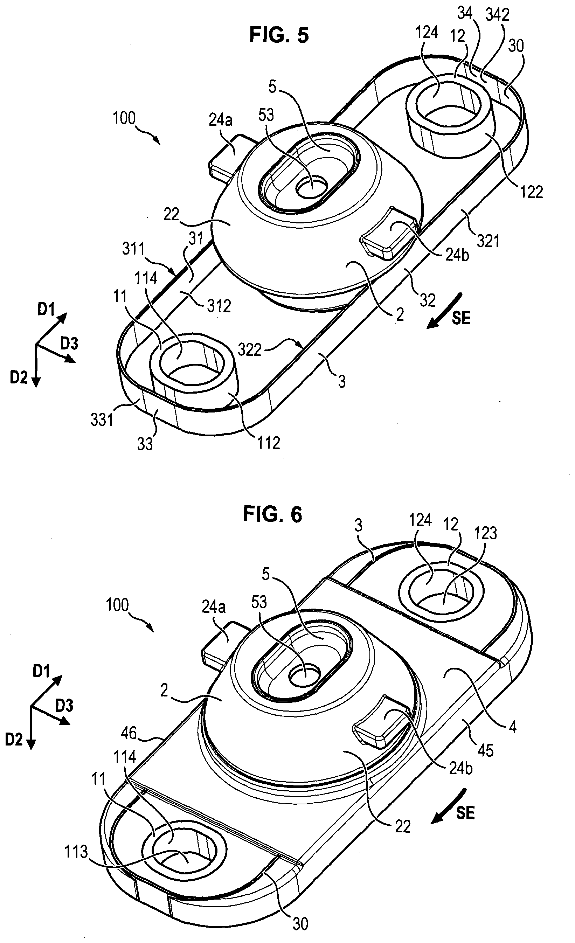

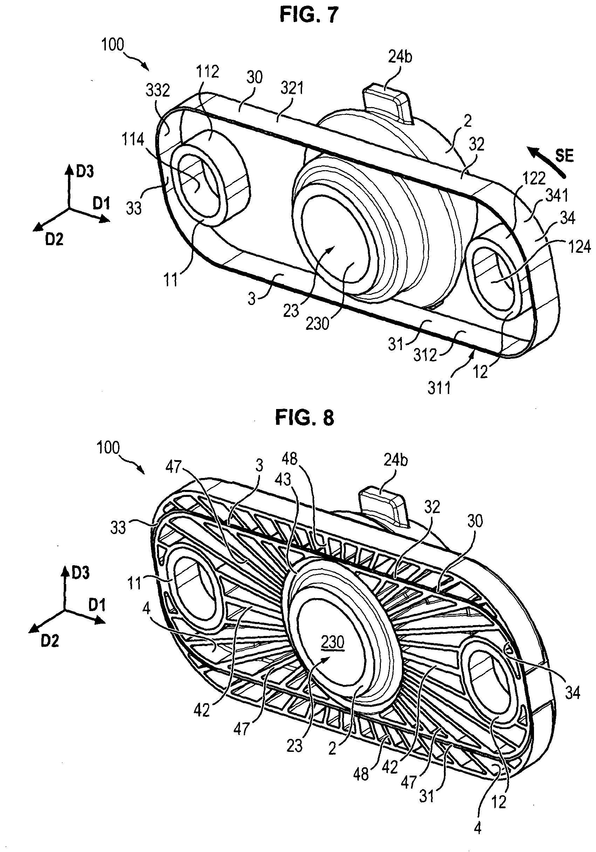

- les figures 5 et 7 sont des vues analogues aux figures 6 et 8, où seules ont été représentées les parties du support anti-vibratoire suivant le premier mode de réalisation de l'invention reliées par la pièce en thermoplastique, laquelle n'a pas été représentée,

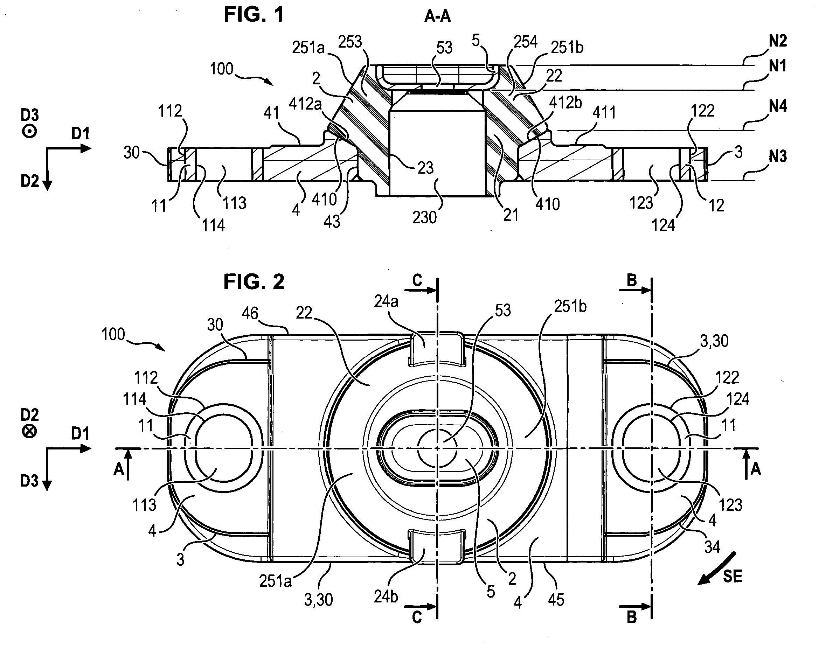

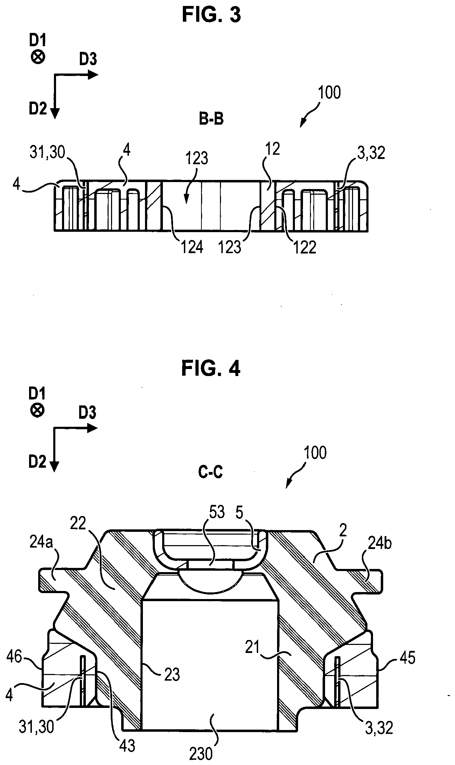

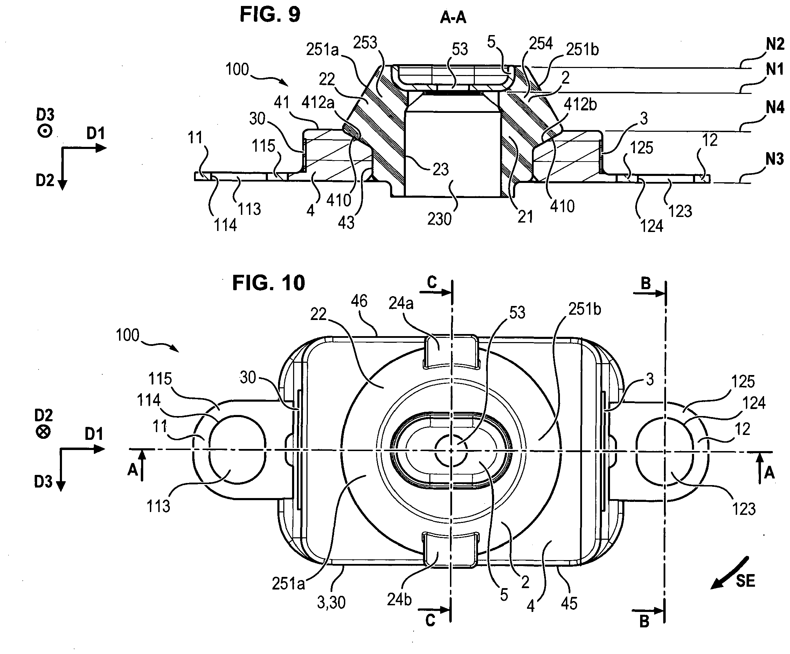

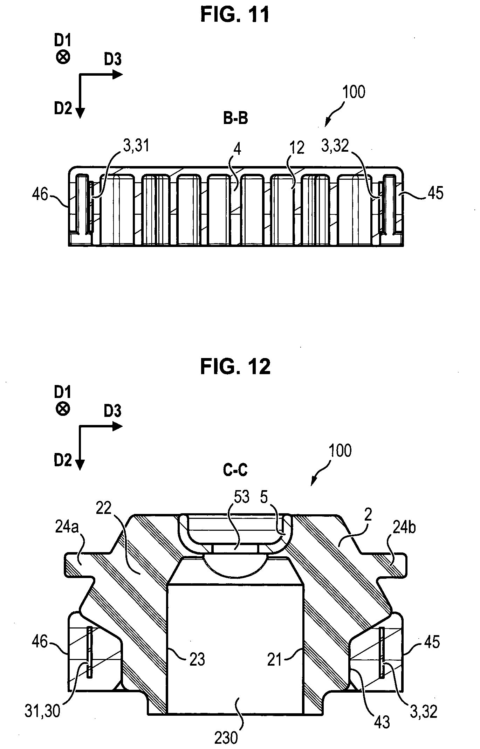

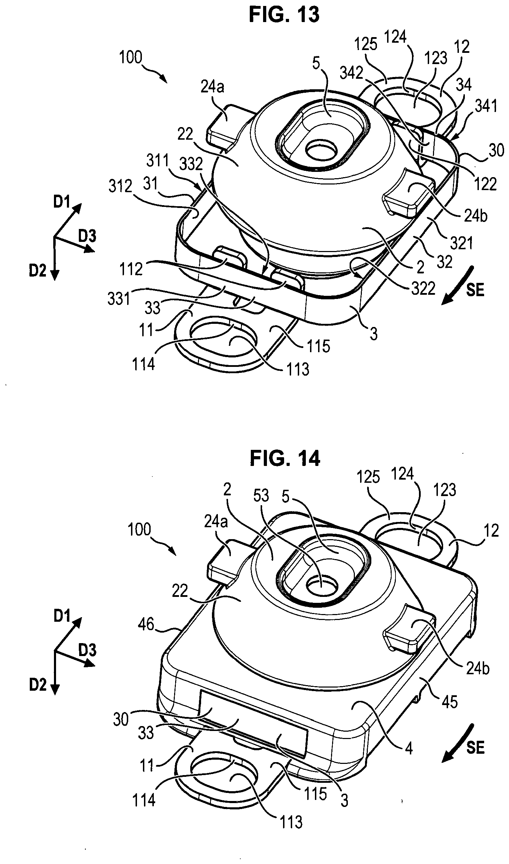

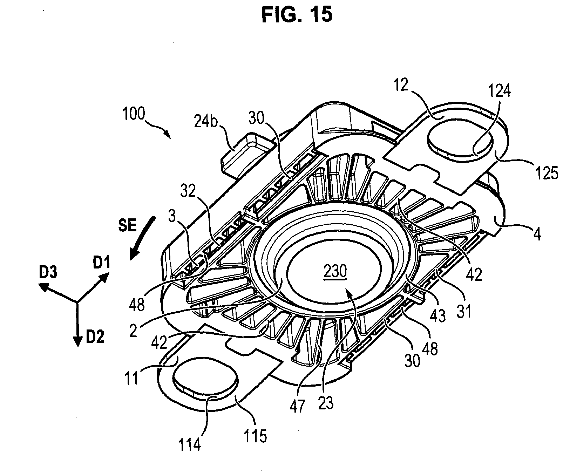

- les figures 9 à 15 sont des vues schématiques analogues aux figures 1 à 6 et 8, pour un support anti-vibratoire suivant un deuxième mode de réalisation de l'invention,

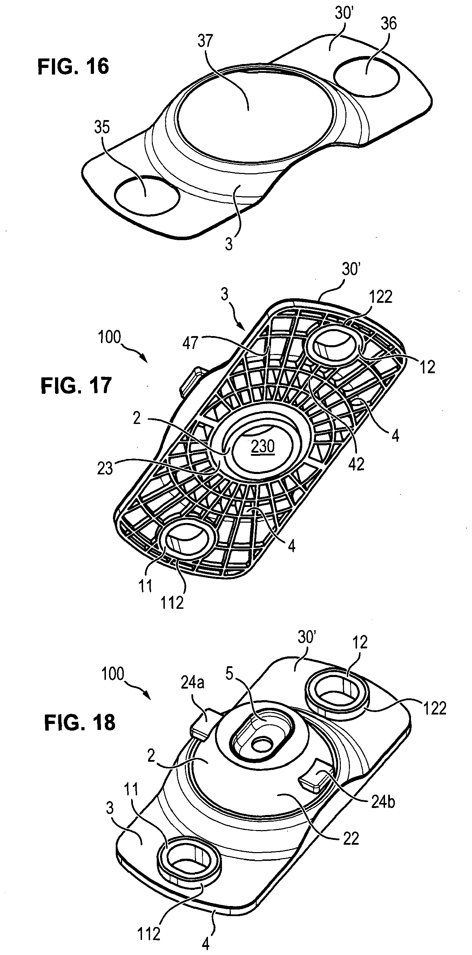

- la figure 16 est une vue schématique en perspective d'un renfort d'un troisième mode de réalisation du support anti-vibratoire suivant l'invention, et les figures 17 et 18 sont des vues schématique en perspective de dessus et de dessous de ce support.

On décrit ci-dessous en référence aux figures des modes de réalisation d'un support anti-vibratoire 100 suivant l'invention. Bien entendu, le support anti-vibratoire 100 peut être différent des modes de réalisation décrits ci-dessous.

Aux figures 1 à 15, le support anti-vibratoire 100 comporte une première armature métallique 11, une deuxième armature métallique 12 et une troisième armature métallique 5. La première armature 11 est distante de la deuxième armature 12 dans une première direction D1 sensiblement horizontale. La troisième armature 5 est distante des armatures 11 et 12 suivant au moins une deuxième direction D2 sensiblement verticale, orientée de haut en bas.

Les armatures 11 et 12 doivent être fixées à une caisse de véhicule automobile, lorsque le support anti-vibratoire 100 est fixé à cette caisse.

La première armature 11 et la deuxième armature 12 sont reliées entre elles par l'intermédiaire du corps 4 en matière thermoplastique. Le corps 4 est oblong suivant la première direction D1, appelée direction longitudinale D1.

Le corps 4 en matière thermoplastique comporte un renfort 3 à fibres continues. Le renfort 3 peut être une pièce préfabriquée, pouvant être par exemple rigide. Les fibres continues peuvent être par exemple noyées dans un polymère pour former la pièce préfabriquée. Le positionnement du renfort 3 et/ou des fibres est agencé pour obtenir un renforcement maximal du support anti-vibratoire.

Le renfort 3 peut être à fibres continues unidirectionnelles, ou à fibres continues multidirectionnelles, ou à fibres continues tissées ou non tissées. Le renfort 3 peut être une pièce préfabriquée à partir d'un ou plusieurs rubans composés des fibres continues et du polymère, le positionnement du ou des rubans étant agencé pour obtenir un renforcement maximal du support anti-vibratoire.

Le renfort 3 peut avoir toute forme.

Le renfort 3 peut avoir une forme annulaire, ou une forme de boucle, ou une forme oblongue, ou une forme courbe, ou une forme tridimensionnelle, ou une forme surfacique (de faible épaisseur), ou autres.

Le renfort 3 entoure les première et deuxième surfaces 112 et 122 à distance de celles-ci, par exemple autour de la direction D2 verticale.

On décrit ci-dessous en référence aux figures 1 à 15 un exemple de renfort 3 en forme de boucle. Bien entendu, le renfort 3 peut être de toute autre forme.

Suivant un mode de réalisation, représenté aux figures 1 à 15, le renfort 3 peut être par exemple une boucle 30 fermée ou un anneau 30, qui entoure à la fois la première surface 112 de l'armature 11 et la deuxième surface 122 de l'armature 12, à distance de celles-ci.

Suivant un mode de réalisation, représenté aux figures 16 et 17, le renfort 3 peut être par exemple de forme surfacique, par exemple en forme de plaque bidimensionnelle ou tridimensionnelle 30', c'est-à-dire ayant une dimension selon la direction verticale D2 beaucoup plus faible qu'horizontalement, et qui entoure à la fois la première surface 112 de l'armature 11 et la deuxième surface 122 de l'armature 12, à distance de celles-ci, la plaque 30' pouvant être courbe et comportant des quatrième et cinquième ouvertures 35 et 36 traversées respectivement par les première et deuxième armatures 11, 12 suivant la direction D2, et une sixième ouverture 37 traversée par la pièce 2 en élastomère suivant la direction D2, le corps 4 pouvant être situé sous la plaque 30'.

Le corps 4 en matière thermoplastique est surmoulé contre au moins une partie d'au moins une surface du renfort 3, contre les première et deuxième surfaces 112 et 122 et contre au moins une surface d'au moins une pièce 2 en élastomère.

Le renfort 3 peut être partiellement ou entièrement noyé dans le corps 4 en matière thermoplastique. Dans les modes de réalisation représenté aux figures 1 à 15, le renfort 3 comporte deux première et deuxième branches 31 et 32, rectilignes ou courbes s'étendant suivant la première direction D1 de la première armature 11 à la deuxième armature 12 à distance de celles-ci, les branches 31 et 32 se raccordant l'une à l'autre par des parties courbes 33 et 34 contournant les armatures 11 et 12 et situées à distance de celles-ci. Des parties de la surface externe 311, 321 des branches 31 et 32 et des parties de la surface interne 312, 322 des branches 31 et 32 sont recouvertes par le corps 4. Au moins une partie de la surface interne 332, 342 des parties courbes 33 et 34 est recouverte par le corps 4. Au moins une partie de la surface externe 331, 341 des parties courbes 33 et 34 est recouverte par le corps 4. Les sens interne et externe désignent l'intérieur de la boucle 30 et l'extérieur de la boucle 30. Le corps 4 comporte des bords extérieurs 45 et 46 s'étendant suivant la direction longitudinale D1 allant de l'armature 11 à l'armature 12, ces bords 45 et 46 étant situés à distance et plus à l'extérieure par rapport aux branches 31 et 32 du renfort 3. Le corps 4 peut comporter des nervures 42 s'étendant entre les armatures 11, 12 et son ouverture 43 et/ou des nervures 47 s'étendant entre le renfort 3 et son ouverture 43 et/ou des nervures 48 s'étendant entre les branches 31 et 32 du renfort 3 et les bords 45, 46.

Le renfort 3 permet de renforcer, notamment horizontalement, la tenue mécanique globale du support anti-vibratoire, notamment entre la première armature 11 et la deuxième armature 12.

Suivant un mode de réalisation, par exemple la boucle 30 du renfort 3 s'étend suivant un sens SE d'enroulement sensiblement horizontal autour de la deuxième direction D2 sensiblement verticale. Les fibres continues de la boucle 30 du renfort 3 s'étendent dans le sens SE d'enroulement sensiblement horizontal autour de la deuxième direction D2 sensiblement verticale. Le renfort 3 est par exemple une boucle plate 30 à section transversale rectangulaire ayant une plus grande hauteur suivant la direction D2 sensiblement verticale que suivant son épaisseur transversale à cette direction D2.

Suivant un mode de réalisation, par exemple le renfort 3 peut être préfabriqué par agencement de ruban(s) de toute forme, par exemple par enroulement d'un ruban en lesdites fibres continues unidirectionnelles noyées dans le polymère et s'étendant dans le sens SE d'enroulement pour adhériser plusieurs couches du ruban en épaisseur ou en largeur (la largeur du renfort 3 étant suivant la direction D2). Le renfort est préfabriqué à part des autres parties du support anti-vibratoire 100. Les fibres peuvent être par exemple en carbone ou en fibres de verre ou autres.

La pièce 2 en élastomère est située entre la troisième armature métallique 5 et le corps 4 en matière thermoplastique. La troisième armature métallique 5 est fixée à la pièce 2 en élastomère, directement ou indirectement à celle-ci. La troisième armature métallique 5 sert d'interface avec une partie vibrante du véhicule automobile. Cette partie vibrante peut être un moteur ou autres, auquel cas le support anti-vibratoire 100 est un support moteur. Par exemple, la troisième armature métallique 5 est destinée à la suspension d'un moteur de propulsion du véhicule automobile, notamment d'un moteur à combustion interne (par exemple à essence ou diesel).

La pièce 2 en élastomère est une pièce d'amortissement de vibrations mécaniques. La pièce 2 en élastomère sert à soutenir l'armature 5 à distance du corps 4 thermoplastique et/ou à distance des armatures 1 et 2 suivant la direction D2. Ainsi, les vibrations mécaniques transmises à la troisième armature métallique 5 par la partie vibrante, lorsque la partie vibrante est fixée à cette troisième armature 5, sont amorties par la pièce 2 en élastomère par rapport aux armatures 11 et 12 lorsqu'elles sont dans leur position de fixation à la caisse du véhicule automobile. La caisse du véhicule automobile peut comporter des première et deuxième pièces de fixation (non représentées) sur lesquelles sont fixées respectivement les première et deuxième armatures 11 et 12, ces première et deuxième pièces de fixation de la caisse étant distantes l'une de l'autre suivant au moins la première direction D1 (pouvant être la direction D1 longitudinale du véhicule, allant de l'arrière vers l'avant) et définissant entre elles un passage dans la direction D2 sensiblement verticale.

Le renfort 3 s'oppose au fait que la deuxième armature 12 s'écarte de la première armature 11 dans la direction D1 les séparant, qui est une direction longitudinale du véhicule, dirigée de l'arrière vers l'avant, et assure une meilleure résistance du support anti-vibratoire. Notamment, dans le cas d'un support anti-vibratoire, ce support anti-vibratoire passe avec succès les essais de collision frontale du véhicule.

La pièce 2 en élastomère est par exemple en caoutchouc. La troisième armature 5 peut être composée d'une seule matière métallique ou être en un bi-composant métal-thermoplastique. La pièce 2 en élastomère peut également contenir une partie hydraulique.

Suivant un mode de réalisation, le corps 4 en matière thermoplastique peut comporter par exemple une première ouverture 43 permettant la traversée dans la deuxième direction D2 sensiblement verticale. Cette première ouverture 43 est entourée par le renfort 3 ou par la boucle 30 du renfort 3. La pièce 2 en élastomère possède une portion intérieure 21 ayant elle-même une deuxième ouverture 23 permettant la traversée dans la deuxième direction D2. La deuxième ouverture 23 est située sous la troisième armature métallique 5 dans la deuxième direction D2. Un passage 230 ouvert vers le bas dans la direction verticale D2 sous l'armature 5 est délimité par l'ouverture 23. Ce passage 230 est entouré par l'ouverture 43. En haut de l'ouverture 23, la portion supérieure 22 du corps 2 en élastomère entoure la troisième armature 5 autour de la direction D2.

Dans les modes de réalisation représentés aux figures 1 à 15, la deuxième ouverture 23 de la pièce 2 en élastomère traverse la première ouverture 43 du corps 4 en matière thermoplastique suivant la direction D2 et est entourée par celle-ci, la portion intérieure 21 étant située également dans l'ouverture 43. Bien entendu, la deuxième ouverture 23 pourrait être à distance de la première ouverture 43 suivant la direction D2, la première ouverture 43 et la deuxième ouverture 23 étant alignées dans la deuxième direction D2 sensiblement verticale.

Ainsi, on peut faire passer verticalement (par la deuxième direction D2) dans la deuxième ouverture 23 une ou plusieurs broches servant à la fixation de la troisième armature métallique 5 à la partie vibrante, cette fixation se faisant par le bas de la troisième armature 5, la partie vibrante étant alors suspendue sous le support anti-vibratoire 100.

Dans les modes de réalisation représentés aux figures 1 à 15, la troisième armature métallique 5 peut comporter au moins une troisième ouverture 53, permettant la traversée dans la deuxième direction D2. Cette troisième ouverture 53 est située au-dessus de la deuxième ouverture 23 et au-dessus du passage 230 dans la deuxième direction D2. La troisième ouverture 53 est accessible par le haut et par le bas. On peut ainsi monter sur le haut de l'ouverture 53 un organe de fixation de la broche, insérée dans l'ouverture 53 par le bas, cet organe de fixation pouvant être par exemple un boulonnage ou autres. La troisième armature 5 est accessible par le haut.

Dans les modes de réalisation représentés aux figures 1 à 15, le renfort 3 ou la boucle 30 du renfort 3 peut s'étendre autour de la deuxième direction D2 sensiblement verticale et entourer à la fois la première ouverture 43 du corps 4 en matière thermoplastique et la deuxième ouverture 23 de la pièce 2 en élastomère.

Ainsi, le corps 4 en matière thermoplastique n'est pas fragilisé par les ouvertures 23 et 43 mais est renforcé par le renfort 3.

Dans les modes de réalisation représentés aux figures 1 à 15, la pièce 2 en élastomère peut avoir par exemple une portion supérieure 22 qui recouvre une partie 410 de la surface supérieure 41 du corps 4 en matière thermoplastique. Cette portion supérieure 22 est d'une seule pièce avec la portion intérieure 21. Cette portion supérieure 22 soutient l'armature 5.

Dans les modes de réalisation représentés aux figures 1 à 15, la pièce 2 en élastomère peut comporter par exemple une première excroissance 24a de butée et une deuxième excroissance 24b de butée vers le bas contre d'autres parties correspondantes du support anti-vibratoire 100. Les excroissances 24a, 24b sont éloignées l'une de l'autre transversalement à la deuxième direction D2.

Ainsi, en cas de vibrations mécaniques envoyées par la partie vibrante à la troisième armature métallique 5 dans le sens vertical, les excroissances 24a et 24b butent vers le bas pour amortir ces vibrations.

Les excroissances 24a et 24b sont par exemple situées au-dessus d'une partie du renfort 3 suivant la direction D2. On assure ainsi une meilleure rigidité du support anti-vibratoire 100.

Dans les modes de réalisation représentés aux figures 1 à 15, la troisième armature métallique 5 peut par exemple s'étendre suivant la deuxième direction D2 sensiblement verticale entre un premier niveau inférieur N1 et un deuxième niveau supérieur N2. Le corps 4 en matière thermoplastique s'étend suivant la deuxième direction D2 sensiblement verticale entre un troisième niveau inférieur N3 et un quatrième niveau supérieur N4. Le premier niveau inférieur N1 peut par exemple être situé au-dessus du quatrième niveau supérieur N4.

Dans les modes de réalisation représentés aux figures 1 à 15, la partie 410 de la surface supérieure 41 du corps 4, recouverte par le corps 2 en élastomère, peut par exemple comporter, sur au moins deux côtés opposés transversalement à la direction D2, une pente descendante 412a, 412b allant d'une partie extérieure 411 de la surface supérieure 41 vers l'intérieur à la première ouverture 43. Ainsi, le corps 4 en matière thermoplastique joue le rôle de berceau par ses surfaces inclinées opposées 412a et 412b, contre lesquelles prend appui la pièce 2 en élastomère pour s'opposer aux vibrations tendant à écarter la troisième armature métallique 5 par rapport à la première ou deuxième armature 11, 12.

Dans les modes de réalisation représentés aux figures 1 à 15, la pièce 2 en élastomère peut par exemple se prolonger vers le bas depuis la deuxième ouverture 23 par une portion inférieure 25.

Dans les modes de réalisation représentés aux figures 1 à 15, la portion supérieure 22 de la pièce 2 en élastomère peut par exemple comporter, sur au moins deux côtés opposés transversalement à la direction D2, une première surface extérieure en pente 251a, 251b remontant de la surface supérieure 410 et/ou 412a, 412b, du corps 4 jusqu'à la troisième armature 5. Les surfaces 251a et 251b délimitent deux parties épaisses respectivement 253 et 254 de la portion supérieure 22 de la pièce 2 en élastomère, ce qui permet de mieux amortir les vibrations.

Dans les modes de réalisation représentés aux figures 1 à 15, les armatures 11 et 12 peuvent par exemple comporter respectivement des premier et deuxième trous 113 et 123, qui servent à la traversée verticale pour la fixation à la caisse de véhicule automobile. Le trou 113 est délimité par une surface libre 114 de l'armature 11. Le trou 123 est délimité par une surface libre 124 de l'armature 12. La troisième surface libre 114 est raccordée à la première surface 112 se trouvant en contact avec le corps 4. La quatrième surface libre 124 est raccordée à la deuxième surface 122 se trouvant en contact avec le corps 4. Les surfaces libres 114 et 124 sont accessibles de l'extérieur pour y loger des organes de fixation à la caisse, pouvant être par exemple des vis ou des boulonnages. Les trous 113 et 123 sont par exemple oblongs suivant la troisième direction D3 horizontale perpendiculaire aux directions D1 et D2.

Dans le premier mode de réalisation représenté aux figures 1 à 8, les première et deuxième armatures 11, 12 peuvent par exemple être formées par respectivement des premier et deuxième anneaux 11, 12 dont l'intérieur délimite les premier et deuxième trous 113, 123. Les surfaces libres 114, 124 sont situées du côté intérieur des premier et deuxième anneaux 11, 12, tandis que les première et deuxième surfaces 112, 122 situées contre le corps 4 sont situées du côté extérieur des premier et deuxième anneaux 11, 12. Les anneaux 11 et 12 sont par exemple cylindriques autour de la direction D2.

Dans le deuxième mode de réalisation représenté aux figures 9 à 15, la troisième surface libre 114 de l'armature 11 peut par exemple être située sur une première patte externe 115 de fixation dépassant vers l'extérieur du corps 4 dans la première direction D1 sensiblement horizontale vers la gauche. La quatrième surface libre 124 de l'armature 12 est située sur une deuxième patte externe 125 de fixation dépassant vers l'extérieur du corps 4 dans la première direction D1 sensiblement horizontale vers la droite. Les premières et deuxièmes pattes 115, 125 sont par exemple horizontales et coudées vers le bas par rapport aux première et deuxième surfaces 112, 122 verticales.

## Revendications

1. Support anti-vibratoire (100), comportant
des première et deuxième armatures métalliques (11, 12) et une troisième armature (5), qui sont accessibles de l'extérieur et distantes l'une de l'autre,
au moins une pièce (2) en élastomère,
le support comportant en outre un corps (4) en matière thermoplastique,
les première et deuxièmes armatures (11, 12) étant éloignées l'une de l'autre dans une première direction (D1) sensiblement horizontale, étant destinées à être fixées à une caisse de véhicule automobile et étant reliées entre elles par l'intermédiaire du corps (4) en matière thermoplastique,
le corps (4) en matière thermoplastique étant surmoulé par rapport à des première et deuxième surfaces (112, 122) des première et deuxième armatures (11, 12) et à au moins une surface de la pièce (2) en élastomère de soutien de la troisième armature (5) destinée à la suspension d'une partie vibrante du véhicule, pour l'amortissement et le filtrage de vibrations mécaniques entre la caisse et la partie vibrante,
**caractérisé en ce que**
la troisième armature (5) est métallique ou en un bi-composant métal-thermoplastique,
le corps (4) en matière thermoplastique comporte au moins un renfort (3) à fibres continues, qui est une pièce préfabriquée et qui est distinct des armatures, pour renforcer la tenue mécanique du support anti-vibratoire,
le corps (4) en matière thermoplastique est surmoulé par rapport à au moins une partie d'au moins une surface du renfort (3),
le renfort (3) entoure les première et deuxième surfaces (112, 122) au moins dans la première direction (D1) sensiblement horizontale.

2. Support anti-vibratoire suivant la revendication 1, **caractérisé en ce que** le corps (4) en matière thermoplastique comporte une première ouverture (43) de traversée dans une deuxième direction (D2) sensiblement verticale, la première ouverture (43) étant entourée par le renfort (3),
une portion intérieure (21) de la pièce (2) en élastomère ayant elle-même une deuxième ouverture (23) de traversée dans la deuxième direction (D2),
un passage (230) ouvert vers le bas dans la deuxième direction (D2) sous la troisième armature (5) étant délimité par la deuxième ouverture (23), le passage (230) étant entouré par la première ouverture (43).

3. Support anti-vibratoire suivant la revendication 2, **caractérisé en ce que** la troisième armature (5) comporte au moins une troisième ouverture (53) de traversée dans la deuxième direction (D2), située au-dessus de la deuxième ouverture (23) dans la deuxième direction (D2).

4. Support anti-vibratoire suivant la revendication 2 ou 3, **caractérisé en ce que** le renfort (3) s'étend suivant un sens (SE) d'enroulement sensiblement horizontal autour de la deuxième direction (D2), et est à fibres continues unidirectionnelles s'étendant dans le sens (SE) d'enroulement et noyées dans un polymère pour former la pièce préfabriquée ayant la forme d'une boucle (30).

5. Support anti-vibratoire suivant l'une quelconque des revendications 2 à 4, **caractérisé en ce que** la deuxième ouverture (23) de la pièce (2) en élastomère traverse la première ouverture (43) du corps (4) en matière thermoplastique suivant la deuxième direction (D2).

6. Support anti-vibratoire suivant l'une quelconque des revendications 2 à 5, **caractérisé en ce que** le renfort (3) s'étend autour de la deuxième direction (D2) et entoure la première ouverture (43) et la deuxième ouverture (23).

7. Support anti-vibratoire suivant l'une quelconque des revendications précédentes, **caractérisé en ce que** la pièce (2) en élastomère comporte une portion supérieure (22) recouvrant une partie (410) de la surface supérieure (41) du corps (4) en matière thermoplastique et soutenant la troisième armature (5).

8. Support anti-vibratoire suivant l'une quelconque des revendications précédentes, **caractérisé en ce que** les première et deuxième surfaces (112, 122) sont verticales.

9. Support anti-vibratoire suivant l'une quelconque des revendications précédentes, **caractérisé en ce que** la pièce (2) en élastomère comporte une première excroissance (24a) de butée et une deuxième excroissance (24b) de butée, qui sont destinées à buter vers le bas contre d'autres parties correspondantes du support anti-vibratoire et qui sont éloignées l'une de l'autre transversalement à une deuxième direction (D2) sensiblement verticale.

10. Support anti-vibratoire suivant l'une quelconque des revendications précédentes, **caractérisé en ce que** la troisième armature (5) s'étend suivant une deuxième direction (D2) sensiblement verticale entre un premier niveau inférieur (N1) et un deuxième niveau supérieur (N2),
le corps (4) en matière thermoplastique s'étend suivant la deuxième direction (D2) sensiblement verticale entre un troisième niveau inférieur (N3) et un quatrième niveau supérieur (N4),
le premier niveau inférieur (N1) étant situé au-dessus du quatrième niveau supérieur (N4).

11. Support anti-vibratoire suivant l'une quelconque des revendications précédentes, **caractérisé en ce que** les première et deuxième armatures (11, 12) comportent respectivement des premier et deuxième trous (113, 123), qui servent à la traversée suivant une deuxième direction (D2) sensiblement verticale pour la fixation à la caisse de véhicule automobile et qui sont délimités par respectivement des troisième et quatrième surfaces libres (114, 124), accessibles de l'extérieur et raccordées aux première et deuxième surfaces (112, 122).

12. Support anti-vibratoire suivant la revendication 11, **caractérisé en ce que** les première et deuxième armatures (11, 12) sont formées par respectivement des premier et deuxième anneaux (11, 12) délimitant les premier et deuxième trous (113, 123), les troisième et quatrième surfaces libres (114, 124) étant situées du côté intérieur des premier et deuxième anneaux (11, 12), les première et deuxième surfaces (112, 122) étant situées du côté extérieur des premier et deuxième anneaux (11, 12).

13. Support anti-vibratoire suivant la revendication 11, **caractérisé en ce que** les troisième et quatrième surfaces (114, 124) et les premier et deuxième trous (1113, 1213) sont situés sur respectivement des première et deuxième pattes (115, 125) externes de fixation dépassant vers l'extérieur du corps (4) dans la première direction (D1) sensiblement horizontale.

14. Support anti-vibratoire suivant la revendication 13, **caractérisé en ce que** les première et deuxième pattes (115, 125) sont horizontales et coudées par rapport aux première et deuxième surfaces (112, 122) verticales.

15. Véhicule automobile, comportant une caisse, un moteur monté sur la caisse et au moins un support anti-vibratoire suivant l'une quelconque des revendications précédentes, les première et deuxièmes armatures (11, 12) étant fixées à la caisse, la troisième armature (5) étant fixée au moteur situé sous le support anti-vibratoire (100).

## Patentansprüche

1. Schwingungsdämpfende Halterung (100), welche aufweist:
eine erste und eine zweite metallische Armierung (11, 12) und eine dritte Armierung (5), welche von außen zugänglich und voneinander entfernt sind,
mindestens ein Teil (2) aus Elastomer,
wobei die Halterung außerdem einen Körper (4) aus thermoplastischem Material aufweist,
wobei die erste und die zweite Armierung (11, 12) in einer im Wesentlichen horizontalen ersten Richtung (D1) voneinander entfernt sind, dazu bestimmt sind, an einer Kraftfahrzeugkarosserie befestigt zu werden, und über den Körper (4) aus thermoplastischem Material miteinander verbunden sind,
wobei der Körper (4) aus thermoplastischem Material aufgeformt ist in Bezug auf eine erste und eine zweite Fläche (112, 122) der ersten und zweiten Armierung (11, 12) und auf mindestens eine Fläche des Teils (2) aus Elastomer zur Abstützung der dritten Armierung (5), die zur Aufhängung eines schwingenden Teils des Fahrzeugs bestimmt ist, für die Dämpfung und die Filterung mechanischer Schwingungen zwischen der Karosserie und dem schwingenden Teil,
**dadurch gekennzeichnet, dass**
die dritte Armierung (5) metallisch ist oder aus einem Zweikomponenten-Verbundmaterial Metall-Thermoplast besteht,
der Körper (4) aus thermoplastischem Material mindestens eine Verstärkung (3) mit Endlosfasern aufweist, welche ein vorgefertigtes Teil ist und welche von den Armierungen verschieden ist, um die mechanische Festigkeit der schwingungsdämpfenden Halterung zu verstärken,
der Körper (4) aus thermoplastischem Material in Bezug auf mindestens einen Teil mindestens einer Fläche der Verstärkung (3) aufgeformt ist,
die Verstärkung (3) die erste und die zweite Fläche (112, 122) mindestens in der im Wesentlichen horizontalen ersten Richtung (D1) umgibt.

2. Schwingungsdämpfende Halterung nach Anspruch 1, **dadurch gekennzeichnet, dass** der Körper (4) aus thermoplastischem Material eine erste Durchgangsöffnung (43) in einer im Wesentlichen vertikalen zweiten Richtung (D2) aufweist, wobei die erste Öffnung (43) von der Verstärkung (3) umgeben ist, wobei ein innerer Abschnitt (21) des Teils (2) aus Elastomer seinerseits eine zweite Durchgangsöffnung (23) in der zweiten Richtung (D2) aufweist,
wobei ein nach unten offener Durchgang (230) in der zweiten Richtung (D2) unter der dritten Armierung (5) von der zweiten Öffnung (23) begrenzt wird, wobei der Durchgang (230) von der ersten Öffnung (43) umgeben ist.

3. Schwingungsdämpfende Halterung nach Anspruch 2, **dadurch gekennzeichnet, dass** die dritte Armierung (5) mindestens eine dritte Durchgangsöffnung (53) in der zweiten Richtung (D2) aufweist, die sich oberhalb der zweiten Öffnung (23) in der zweiten Richtung (D2) befindet.

4. Schwingungsdämpfende Halterung nach Anspruch 2 oder 3, **dadurch gekennzeichnet, dass** sich die Verstärkung (3) in einer im Wesentlichen horizontalen Wickelrichtung (SE) um die zweite Richtung (D2) herum erstreckt und unidirektionale Endlosfasern aufweist, die sich in der Wickelrichtung (SE) erstrecken und in ein Polymer eingebettet sind, um das vorgefertigte Teil zu bilden, das die Form einer Schleife (30) aufweist.

5. Schwingungsdämpfende Halterung nach einem der Ansprüche 2 bis 4, **dadurch gekennzeichnet, dass** die zweite Öffnung (23) des Teils (2) aus Elastomer die erste Öffnung (43) des Körpers (4) aus thermoplastischem Material in der zweiten Richtung (D2) durchquert.

6. Schwingungsdämpfende Halterung nach einem der Ansprüche 2 bis 5, **dadurch gekennzeichnet, dass** sich die Verstärkung (3) um die zweite Richtung (D2) herum erstreckt und die erste Öffnung (43) und die zweite Öffnung (23) umgibt.

7. Schwingungsdämpfende Halterung nach einem der vorhergehenden Ansprüche, **dadurch gekennzeichnet, dass** das Teil (2) aus Elastomer einen oberen Abschnitt (22) aufweist, der einen Teil (410) der oberen Fläche (41) des Körpers (4) aus thermoplastischem Material bedeckt und die dritte Armierung (5) stützt.

8. Schwingungsdämpfende Halterung nach einem der vorhergehenden Ansprüche, **dadurch gekennzeichnet, dass** die erste und die zweite Fläche (112, 122) vertikal sind.

9. Schwingungsdämpfende Halterung nach einem der vorhergehenden Ansprüche, **dadurch gekennzeichnet, dass** das Teil (2) aus Elastomer einen ersten Anschlagvorsprung (24a) und einen zweiten Anschlagvorsprung (24b) aufweist, die dazu bestimmt sind, nach unten an entsprechenden anderen Teilen der schwingungsdämpfenden Halterung in Anlage zu kommen, und die quer zu einer im Wesentlichen vertikalen zweiten Richtung (D2) voneinander entfernt sind.

10. Schwingungsdämpfende Halterung nach einem der vorhergehenden Ansprüche, **dadurch gekennzeichnet, dass** sich die dritte Armierung (5) in einer im Wesentlichen vertikalen zweiten Richtung (D2) zwischen einer unteren ersten Höhe (N1) und einer oberen zweiten Höhe (N2) erstreckt
und sich der Körper (4) aus thermoplastischem Material in der im Wesentlichen vertikalen zweiten Richtung (D2) zwischen einer unteren dritten Höhe (N3) und einer oberen vierten Höhe (N4) erstreckt,
wobei sich die untere erste Höhe (N1) oberhalb der oberen vierten Höhe (N4) befindet.

11. Schwingungsdämpfende Halterung nach einem der vorhergehenden Ansprüche, **dadurch gekennzeichnet, dass** die erste und die zweite Armierung (11, 12) ein erstes bzw. zweites Loch (113, 123) aufweisen, welche als Durchgang in einer im Wesentlichen vertikalen Richtung (D2) für die Befestigung an der Kraftfahrzeugkarosserie dienen und welche durch eine dritte bzw. vierte freie Fläche (114, 124) begrenzt sind, die von außen zugänglich sind und an die erste und zweite Fläche (112, 122) angeschlossen sind.

12. Schwingungsdämpfende Halterung nach Anspruch 11, **dadurch gekennzeichnet, dass** die erste und die zweite Armierung (11, 12) von einem ersten bzw. zweiten Ring (11, 12) gebildet werden, die das erste und das zweite Loch (113, 123) begrenzen, wobei sich die dritte und vierte freie Fläche (114, 124) auf der Innenseite des ersten und zweiten Ringes (11, 12) befinden und die erste und zweite Fläche (112, 122) sich auf der Außenseite des ersten und zweiten Ringes (11, 12) befinden.

13. Schwingungsdämpfende Halterung nach Anspruch 11, **dadurch gekennzeichnet, dass** die dritte und vierte Fläche (114, 124) und das erste und zweite Loch (1113, 1213) sich an einer ersten bzw. zweiten äußeren Befestigungslasche (115, 125) befinden, die vom Körper (4) in der im Wesentlichen horizontalen ersten Richtung (D1) nach außen vorstehen.

14. Schwingungsdämpfende Halterung nach Anspruch 13, **dadurch gekennzeichnet, dass** die erste und die zweite Lasche (115, 125) horizontal sind und in Bezug auf die vertikale erste und vertikale zweite Fläche (112, 122) abgewinkelt sind.

15. Kraftfahrzeug, welches eine Karosserie, einen auf der Karosserie gelagerten Motor und mindestens eine schwingungsdämpfende Halterung nach einem der vorhergehenden Ansprüche aufweist, wobei die erste und die zweite Armierung (11, 12) an der Karosserie befestigt sind, während die dritte Armierung (5) am Motor befestigt ist, der sich unter der schwingungsdämpfenden Halterung (100) befindet.

## Claims

1. Anti-vibration support (100), having
first and second metallic reinforcements (11, 12) and a third reinforcement (5), which are accessible from the outside and are at a distance from one another,
at least one elastomer component (2),
the support also having a body (4) made of thermoplastic material,
the first and second reinforcements (11, 12) being remote from one another in a first, substantially horizontal direction (D1), being intended to be fastened to a motor vehicle bodyshell and being connected to each other via the body (4) made of thermoplastic material,
the body (4) made of thermoplastic material being overmoulded with respect to first and second surfaces (112, 122) of the first and second reinforcements (11, 12) and with respect to at least one surface of the elastomer component (2) for supporting the third reinforcement (5) intended for the suspension of a vibrating part of the vehicle, for the damping and filtering of mechanical vibrations between the bodyshell and the vibrating part,
**characterized in that**
the third reinforcement (5) is metallic or made from a metal-thermoplastic two-part substance,
the body (4) made of thermoplastic material has at least one reinforcer (3) with continuous fibres, which is a prefabricated component and is separate from the reinforcements, so as to reinforce the mechanical integrity of the anti-vibration support,
the body (4) made of thermoplastic material is overmoulded with respect to at least one part of at least one surface of the reinforcer (3),
the reinforcer (3) surrounds the first and second surfaces (112, 122) at least in the first, substantially horizontal direction (D1).

2. Anti-vibration support according to Claim 1, **characterized in that** the body (4) made of thermoplastic material has a first through-opening (43) in a second, substantially vertical direction (D2), the first opening (43) being surrounded by the reinforcer (3),
an inner portion (21) of the elastomer component (2) itself having a second through-opening (23) in the second direction (D2),
a passage (230) that is open towards the bottom in the second direction (D2) beneath the third reinforcement (5) being delimited by the second opening (23), the passage (230) being surrounded by the first opening (43).

3. Anti-vibration support according to Claim 2, **characterized in that** the third reinforcement (5) has at least one third through-opening (53) in the second direction (D2), situated above the second opening (23) in the second direction (D2).

4. Anti-vibration support according to Claim 2 or 3, **characterized in that** the reinforcer (3) extends in a substantially horizontal direction of winding (SE) around the second direction (D2), and has continuous unidirectional fibres extending in the direction of winding (SE) and embedded in a polymer so as to form the prefabricated component having the shape of a loop (30).

5. Anti-vibration support according to any one of Claims 2 to 4, **characterized in that** the second opening (23) in the elastomer component (2) passes through the first opening (43) in the body (4) made of thermoplastic material in the second direction (D2).

6. Anti-vibration support according to any one of Claims 2 to 5, **characterized in that** the reinforcer (3) extends around the second direction (D2) and surrounds the first opening (43) and the second opening (23).

7. Anti-vibration support according to any one of the preceding claims, **characterized in that** the elastomer component (2) has an upper portion (22) covering a part (410) of the upper surface (41) of the body (4) made of thermoplastic material and supporting the third reinforcement (5).

8. Anti-vibration support according to any one of the preceding claims, **characterized in that** the first and second surfaces (112, 122) are vertical.

9. Anti-vibration support according to any one of the preceding claims, **characterized in that** the elastomer component (2) has a first abutment protrusion (24a) and a second abutment protrusion (24b), which are intended to downwardly abut other corresponding parts of the anti-vibration support and are remote from one another transversely to a second, substantially vertical direction (D2).

10. Anti-vibration support according to any one of the preceding claims, **characterized in that** the third reinforcement (5) extends in a second, substantially vertical direction (D2) between a first, lower level (N1) and a second, upper level (N2),
the body (4) made of thermoplastic material extends in the second, substantially vertical direction (D2) between a third, lower level (N3) and a fourth, upper level (N4),
the first, lower level (N1) being situated above the fourth, upper level (N4).

11. Anti-vibration support according to any one of the preceding claims, **characterized in that** the first and second reinforcements (11, 12) respectively have first and second holes (113, 123), which allow them to be passed through in a second, substantially vertical direction (D2) for the fastening to the motor vehicle bodyshell and are delimited by, respectively, third and fourth free surfaces (114, 124), which are accessible from the outside and connected to the first and second surfaces (112, 122).

12. Anti-vibration support according to Claim 11, **characterized in that** the first and second reinforcements (11, 12) are formed by, respectively, first and second rings (11, 12) delimiting the first and second holes (113, 123), the third and fourth free surfaces (114, 124) being situated on the inside of the first and second rings (11, 12), the first and second surfaces (112, 122) being situated on the outside of the first and second rings (11, 12).

13. Anti-vibration support according to Claim 11, **characterized in that** the third and fourth surfaces (114, 124) and the first and second holes (1113, 1213) are situated on, respectively, first and second external fastening tabs (115, 125) projecting towards the outside of the body (4) in the first, substantially horizontal direction (D1).

14. Anti-vibration support according to Claim 13, **characterized in that** the first and second tabs (115, 125) are horizontal and elbowed with respect to the first and second vertical surfaces (112, 122).

15. Motor vehicle, having a bodyshell, an engine mounted on the bodyshell and at least one anti-vibration support according to any one of the preceding claims, the first and second reinforcements (11, 12) being fastened to the bodyshell, the third reinforcement (5) being fastened to the engine situated beneath the anti-vibration support (100).
